Europäisches Patentamt

European Patent Office

Office européen des brevets

(19)

(11) **EP 0 631 400 B1**

(12) **FASCICULE DE BREVET EUROPEEN**

(45) Date de publication et mention
de la délivrance du brevet:
**15.09.1999   Bulletin 1999/37**

(51) Int Cl.⁶: **H04B 7/26**, H04B 7/185

(21) Numéro de dépôt: **94401397.8**

(22) Date de dépôt: **22.06.1994**

(54) **Dispositif d'émission/réception de signaux numériques portable bimode**

Tragbare Sende-Empfängeranordnung für digitale Signale mit 2 Betriebsarten

Portable transmitting and receiving device for two-mode digital signals

(84) Etats contractants désignés:
**AT BE CH DE DK ES FR GB IT LI NL SE**

(30) Priorité: **25.06.1993  FR 9307775**

(43) Date de publication de la demande:
**28.12.1994   Bulletin 1994/52**

(73) Titulaire: **ALCATEL**
**75008 Paris (FR)**

(72) Inventeur: **Auvray, Gerard**
**F-95870 Bezons (FR)**

(74) Mandataire: **El Manouni, Josiane et al**
**COMPAGNIE FINANCIERE ALCATEL,**
**Département Propriété Industrielle,**
**30, avenue Kléber**
**75116 Paris (FR)**

(56) Documents cités:
**EP-A- 0 540 808**          **US-A- 4 479 256**

• **FOURTH IEE CONFERENCE ON TELECOMMUNICATIONS, Avril 1993, MANCHESTER,GB; pages 306 - 311 MAZZELLA ET AL 'Multiple access techniques and spectrum utilisation of the Globalstar mobile satellite system'**

## Description

Le domaine de l'invention est celui des radiocommunications numériques.

Plus précisément, l'invention concerne un dispositif de radiocommunication portable bimode, c'est-à-dire susceptible de fonctionner alternativement dans deux systèmes de transmission distincts, à savoir d'une part un réseau de radiocommunication terrestre, par exemple cellulaire, et d'autre part un réseau de radiocommunication satellitaire. Un domaine d'application particulier de l'invention est celui des radiocommunications terrestres GSM (Groupe Spécial Mobile) DCS 1800 et satellitaires Globalstar/Inmarsat.

Pour pouvoir cohabiter, les deux réseaux de radiocommunication considérés doivent bien sûr mettre en oeuvre des bandes de fréquence distinctes. Ainsi, dans l'exemple précité, le système terrestre GSM DCS 1800 utilise en émission la bande 1710-1785 MHz et en réception la bande 1805-1880 MHz, alors que le système satellitaire Globalstar exploite les bandes de fréquence 1610-1625,5 MHz en émission et 2483,5-2500 MHz.

Ces bandes de fréquence différentes imposent la présence, dans un dispositif d'émission/réception bimode, de moyens de transmission, respectivement de réception, spécifiques à chaque mode de fonctionnement (terrestre ou satellitaire).Cela se traduit donc par une augmentation du coût, de l'encombrement, du poids et de la consommation du dispositif d'émission/réception. Or ces caractéristiques sont cruciales dans la conception d'un dispositif portable, et on cherche toujours à les limiter.

Lorsque les bandes de fréquence considérées sont sensiblement voisines, les mêmes moyens peuvent éventuellement être utilisés, moyennant quelques adaptations. C'est par exemple le cas des bandes d'émission des deux systèmes GSM et Globalstar. En revanche, lorsque les bandes de fréquence sont relativement éloignées (cas des bandes de fréquence de réception des systèmes précités), la duplication des moyens, en particulier pour la modulation et/ou la démodulation, s'avère obligatoire, entraînant donc des problèmes de poids, de consommation...

L'invention a notamment pour objectif de pallier ces inconvénients de l'état de la technique.

Plus précisément, un objectif de l'invention est de fournir un dispositif d'émission/réception de signaux numériques portable bimode pour les radiocommunications terrestres et satellitaires dans lequel l'augmentation d'encombrement, de poids et de consommation par rapport aux dispositifs monomodes (terrestres ou satellitaires) est limitée.

En particulier, l'invention a pour objectif de fournir un tel dispositif ne nécessitant pas la duplication de l'ensemble des chaînes de réception et/ou d'émission, même lorsque les bandes de fréquence considérées sont relativement distantes l'une de l'autre.

Ces objectifs, ainsi que d'autres qui apparaîtront par la suite, sont atteints selon l'invention à l'aide d'un dispositif d'émission/réception de signaux numériques portable bimode permettant des communications, selon un premier mode de transmission, via un réseau terrestre utilisant une première bande de fréquence d'émission et une seconde bande de fréquence de réception, et, selon un second mode de transmission, via un réseau satellitaire utilisant une troisième bande de fréquence d'émission et une quatrième bande de fréquence de réception, lesdites première et troisième bandes de fréquence étant sensiblement voisines et lesdites seconde et quatrième bandes de fréquence étant sensiblement distantes l'une de l'autre, dispositif comprenant des moyens de synthèse d'une première fréquence de modulation pour la modulation des signaux émis dans lesdites première et troisième bandes de fréquence, et d'une seconde fréquence de transposition pour la démodulation des signaux reçus dans lesdites seconde et quatrième bandes de fréquence, et des moyens de division de ladite seconde fréquence de transposition, délivrant une troisième fréquence de transposition pour la démodulation des signaux reçus dans ladite quatrième, respectivement seconde, bande de fréquence.

Ainsi, selon une caractéristique essentielle de l'invention, deux fréquences sont disponibles pour la démodulation, mais un seul synthétiseur de fréquence est nécessaire, la seconde fréquence étant obtenue par division de la première, générée par le synthétiseur. Il en résulte un gain en poids, en encombrement et en consommation qui est essentiel dans le cas d'un dispositif portable. La démodulation d'une des bandes nécessite l'utilisation des seconde et troisième fréquences de transposition, alors que la démodulation de l'autre bande n'utilise que la seconde fréquence (dans un mode de réalisation particulier, une quatrième fréquence peut être nécessaire).

De façon avantageuse, le dispositif comprend :

- des moyens de modulation sur deux voies en quadrature contrôlés par ladite première fréquence, assurant une modulation à conversion directe des signaux émis dans lesdites première et troisième bandes de fréquence ;
- des premiers moyens de transposition sur deux voies en quadrature contrôlés par ladite seconde fréquence, assurant une démodulation à conversion directe des signaux reçus dans ladite seconde, respectivement quatrième, bande de fréquence ;
- des seconds moyens de transposition à fréquence intermédiaire contrôlés par ladite troisième fréquence, assurant le produit des signaux reçus dans ladite quatrième, respectivement seconde, bande de fréquence par ladite troisième fréquence et délivrant un signal en fréquence intermédiaire destiné à être démodulé par lesdits premiers moyens de transposition.

Ainsi, dans un premier mode, la démodulation est effectuée en conversion directe, et dans le second mode en fréquence intermédiaire. Les moyens de transposition en quadrature sont utilisés dans les deux modes. A nouveau, il en résulte un gain en encombrement et en consommation.

Dans un autre mode de réalisation particulier de l'invention, ladite seconde fréquence pilote des moyens de transposition en fréquence intermédiaire, ledit dispositif comprenant alors des moyens de génération d'une quatrième fréquence fixe contrôlant des moyens de transposition, respectivement de modulation, en quadrature à conversion directe.

Préférentiellement, lesdits moyens de division effectuent une division de fréquence par N, où N est un entier sensiblement égal à ± $f_{r1}/(f_{r2}-f_{r1})$, $f_{r1}$ correspondant à ladite quatrième, respectivement seconde, bande de fréquence, et $f_{r2}$ correspondant à ladite seconde, respectivement quatrième, bande de fréquence.

Ainsi, cette seconde fréquence permet d'assurer directement la transposition en fréquence intermédiaire adéquate pour pouvoir utiliser ensuite les moyens de transposition en quadrature.

De façon symétrique, l'invention concerne également un dispositif d'émission/réception de signaux numériques portable bimode permettant des communications, selon un premier mode de transmission, via un réseau terrestre utilisant une première bande de fréquence d'émission et une seconde bande de fréquence de réception, et, selon un second mode de transmission, via un réseau satellitaire utilisant une troisième bande de fréquence d'émission et une quatrième bande de fréquence de réception, lesdites seconde et quatrième bandes de fréquence étant sensiblement voisines et lesdites première et troisième bandes de fréquence étant sensiblement distantes l'une de l'autre, comprenant des moyens de synthèse d'une première fréquence de transposition pour la démodulation des signaux reçus dans lesdites seconde et quatrième bandes de fréquence, et d'une seconde fréquence de modulation pour la modulation des signaux émis dans lesdites première et troisième bandes de fréquence, et des moyens de division de ladite seconde fréquence de modulation, délivrant une troisième fréquence de modulation pour la transposition des signaux émis dans ladite troisième, respectivement première, bande de fréquence.

Dans ce cas, ce sont les bandes de fréquence d'émission qui sont traitées de façon distincte, puisque ce sont celles-ci qui sont distantes l'une de l'autre.

Avantageusement, les signaux numériques transmis selon ledit premier mode sont codés selon un premier type de codage et les signaux numériques transmis selon ledit second mode sont codés selon un second type de codage et lesdits premiers moyens de modulation, respectivement de transposition, sont connectés sélectivement à des premiers ou à des seconds moyens de codage, respectivement de décodage, en fonction du mode de transmission mis en oeuvre.

Dans un mode de réalisation particulier, le dispositif comprend des seconds moyens de division de ladite seconde fréquence, délivrant une quatrième fréquence pour la transposition en fréquence intermédiaire d'au moins un signal en cours de traitement.

Ainsi, il est possible de réaliser une seconde transposition en fréquence intermédiaire.

Préférentiellement, le dispositif de l'invention comprend une première antenne d'émission/réception permettant la réception d'au moins une desdites bandes de fréquence de réception et l'émission d'au moins une desdites bandes de fréquence d'émission, lesdites bandes de fréquence étant sensiblement voisines et une seconde antenne de réception, respectivement d'émission, ladite première antenne étant associée directement auxdits premiers moyens de transposition, respectivement de modulation, et ladite seconde antenne étant associée auxdits seconds moyens de transposition, respectivement de modulation.

Ainsi, la réception et l'émission sur les quatre bandes de fréquence ne nécessitent que deux antennes.

Dans ce cas, le dispositif comprend avantageusement des moyens de sélection d'une desdites antennes, en fonction du mode de transmission mis en oeuvre.

Dans un autre mode de réalisation avantageux de l'invention, le dispositif d'émission/réception comprend une antenne unique à double résonance, accordée de façon à assurer l'émission et la réception de l'ensemble desdites bandes de fréquence.

L'invention s'applique notamment aux systèmes GSM et Globalstar, dans lesquels:

- ladite première bande de fréquence d'émission est comprise entre 1710 et 1785 MHz ;
- ladite première bande de réception est comprise entre 1805 et 1880 MHz ;
- ladite seconde bande de fréquence d'émission est comprise entre 1610 et 1625,5 MHz ; et
- ladite seconde bande de fréquence de réception est comprise entre 2483,5 et 2500 MHz.

Dans ce cas, lesdits moyens de division assurent avantageusement une division par 3.

D'autres caractéristiques et avantages de l'invention apparaîtront à la lecture de la description suivante d'un mode de réalisation préférentiel, donné à titre de simple exemple illustratif et non limitatif, et des dessins annexés dans lesquels :

- la figure 1 présente la répartition des bandes de fréquence d'émission et de réception, dans l'exemple de mise en oeuvre correspondant à une transmission terrestre GSM et à une transmission satellitaire Globalstar ;

- la figure 2 est un schéma synoptique d'un dispositif d'émission/réception selon l'invention, utilisant les bandes de fréquence de la figure 1 ;
- la figure 3 illustre une variante des moyens de démodulation analogique de la figure 2 ;
- la figure 4 présente une variante des moyens d'émission et de réception de la figure 2, à antenne unique bibande.

L'invention a donc pour objectif de fournir un dispositif de radiocommunication bimode, permettant d'une part des communications via un réseau terrestre, et d'autre part via un réseau satellitaire.

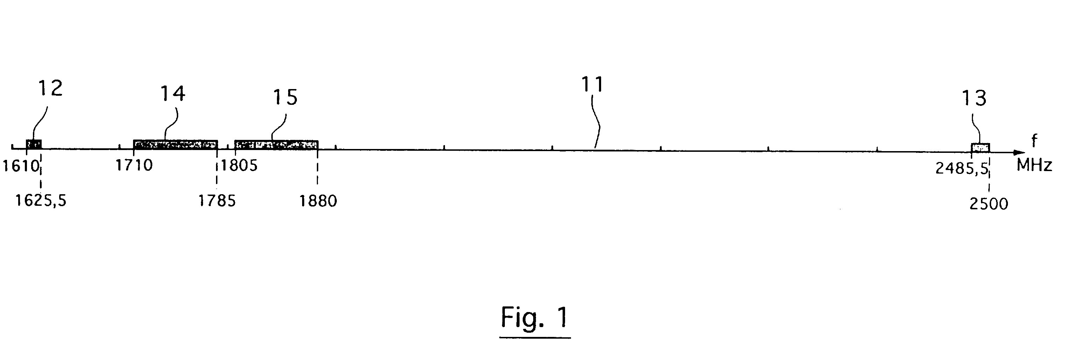

Le mode de réalisation préférentiel décrit ci-dessous concerne un tel dispositif prévu pour les radiocommunications cellulaires GSM DCS 1800 et les radiocommunications par satellite au standard Globalstar. Les bandes de fréquence utilisées par ces deux systèmes sont représentées en figure 1.

Ces systèmes de radiocommunication et les bandes de fréquence correspondantes sont bien sûr de simples exemples. Il est clair que le dispositif de l'invention peut être mis en oeuvre dans d'autres plages de fréquence, et pour d'autres systèmes.

La figure 1 présente, sur l'axe fréquentiel 11, les bandes de fréquence utilisées par le système Globalstar, à savoir :

- bande de fréquence d'émission (TX) 12 : 1610-1625,5 MHz;
- bande de fréquence de réception (RX) 13 : 2483,5-2500 MHz ;

et les bandes de fréquence du système GSM :

- bande de fréquence d'émission (TX) 14 : 1710-1785 MHz ;
- bande de fréquence de réception (RX) 15 : 1805-1880 MHz.

Il apparaît clairement sur cette figure que les bandes de fréquence 14 et 15 du système GSM sont proches l'une de l'autre. Elles peuvent donc être émises et reçues à l'aide d'une antenne bidirectionnelle. En revanche, les bandes de fréquence 12 et 13 du système Globalstar sont très éloignées, et deux antennes sont nécessaires.

Par ailleurs, les bandes de réception 13 et 15 sont également très éloignées. Il n'est donc pas possible de les recevoir avec les mêmes moyens de réception (antenne, convertisseurs bande de base...).

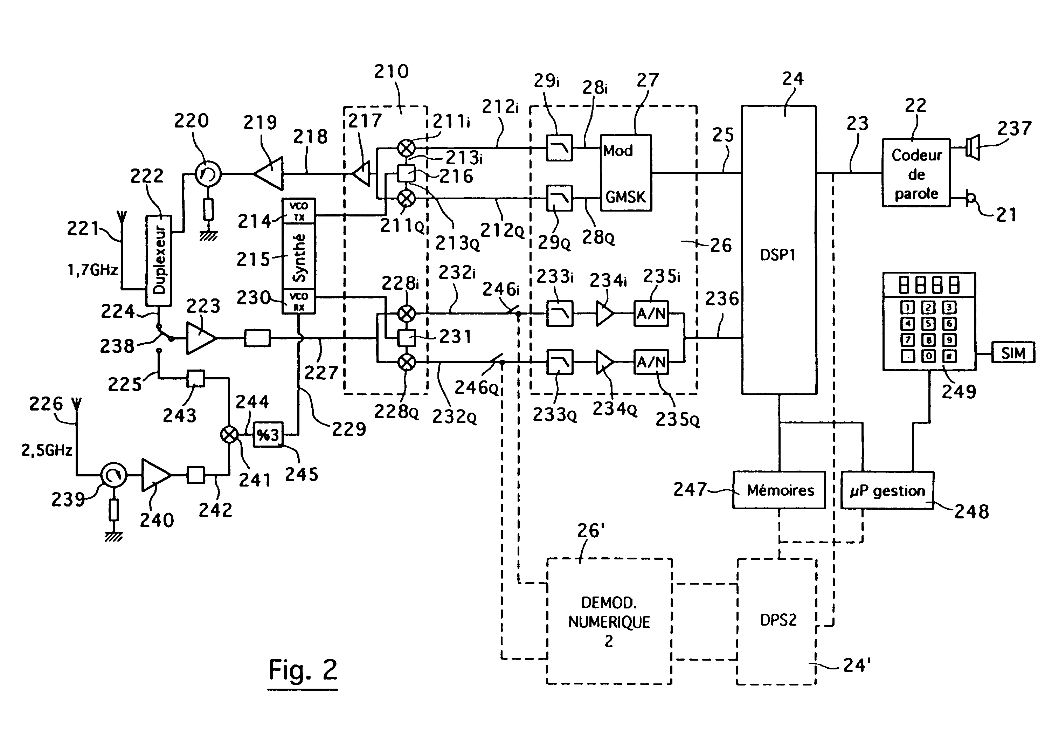

La figure 2 est un schéma synoptique du dispositif bimode de l'invention, pour les bandes de fréquence de la figure 1.

On décrit tout d'abord la chaîne d'émission. Le dispositif comprend un microphone 21, qui transmet les signaux sonores à un module 22 de codage de la parole.

Le signal de parole codé 23 est transmis à un processeur de traitement de signal (DSP) 24, qui assure notamment le codage de canal du signal.

Classiquement, le DSP 24 est connecté à une mémoire vive (RAM) 247. Il est contrôlé par un microprocesseur de gestion 248, lui-même relié au clavier 249.

Le DSP 24 délivre un signal 25 à une chaîne de modulation numérique 26, comprenant un module 27 de modulation selon la technique GMSK, qui fournit deux voies en quadrature $28_I$ et $28_Q$. Les deux voies $28_I$ et $28_Q$ sont transmises, après avoir été filtrées par un filtre passe-bas $29_I$, $29_Q$ respectivement, à une chaîne 210 de modulation analogique.

La chaîne 210 comprend deux mélangeurs $211_I$ et $211_Q$ qui effectuent respectivement les produits suivants :

- mélangeur $211_I$ : produit du signal $212_I$ délivré par l e filtre $29_I$ avec une porteuse pure $213_I$ délivrée par l'oscillateur contrôlé en tension (VCO) d'émission 214 d'un module 215 de synthèse de fréquence ;
- mélangeur $211_Q$ : produit du signal $212_Q$ délivré par le filtre $29_Q$ avec une porteuse pure $213_Q$ correspondant à la porteuse $213_I$ déphasée de 90° par le déphaseur 216.

Les deux voies modulées sont regroupées et amplifiées par un premier amplificateur 217, délivrant un signal 218 à un amplificateur de puissance 219, puis éventuellement à un circulateur 220. Le circulateur 220 est relié à une antenne bidirectionnelle 221 accordée sur 1,7 GHz, par l'intermédiaire d'un duplexeur 22, dont le rôle est précisé par la suite.

Les moyens d'émission de la chaîne 210 de modulation analogique et l'amplificateur 219 sont des moyens large bande. Ils sont choisis de façon qu'ils puissent amplifier le signal:

- dans la bande de fréquence 1610-1625,5 MHz, pour le mode satellitaire ;
- dans la bande de fréquence 1710-1785 MHz, pour le mode terrestre.

Ainsi, les mêmes moyens permettent d'assurer l'émission dans les deux modes, sans duplication d'éléments techniques. Il suffit d'ajuster la fréquence de modulation délivrée par l'oscillateur 214 à la fréquence précise du mode de transmission mis en oeuvre.

Dans le cas de la réception, en revanche, les mêmes moyens ne peuvent pas être utilisés, les deux bandes de réception 13 et 15 étant très éloignées l'une de l'autre (voir figure 1). L'invention offre cependant une solution nouvelle, permettant de réduire le nombre d'éléments dupliqués, et en particulier de n'utiliser qu'une chaîne de modulation analogique.

Ainsi, en réception, un amplificateur 223 à faible bruit reçoit, selon le mode de réception, le signal 224 reçu par l'antenne 221 (mode terrestre) ou le signal 225 reçu par une seconde antenne 226 puis adapté (mode satellitaire). A partir de l'amplificateur 223, le traitement est unique, quel que soit le mode de transmission.

Le signal 227 délivré par l'amplificateur 223 alimente la chaîne 210 qui effectue la transposition en bande de base. Deux mélangeurs $228_I$ et $228_Q$, contrôlés par la fréquence de transposition en bande de base 229 générée par un oscillateur de réception 230 du module de synthèse 215 assurent la transposition en bande de base. Un déphaseur 231 assure le déphasage de 90° nécessaire à la transposition de la voie en quadrature.

Les signaux transposés en bande de base $232_I$ et $232_Q$ sont transmis à la chaîne de démodulation numérique 26, qui comprend, pour chaque voie I et Q un filtre passe-bas $233_I$, $233_Q$, un amplificateur $234_I$, $234_Q$ et un convertisseur analogique/numérique $235_I$, $235_Q$.

Les signaux numérisés 236 sont dirigés vers le module 24 de traitement du signal qui effectue notamment la démodulation et le décodage de canal. Le signal sonore est enfin restitué par un haut-parleur 237, après avoir été reconstruit par le codeur de parole 24.

On précise maintenant les traitements distincts des signaux reçus, selon le mode de transmission.

L'amplificateur 223 est précédé d'un commutateur 238, qui peut prendre deux positions correspondant respectivement aux deux modes de transmission.

Il peut par exemple s'agir d'un interrupteur mécanique, ou d'un interrupteur électrique à faible perte, tel qu'un commutateur à diodes AsGa.

Dans une première position (transmission terrestre), le commutateur 238 connecte l'amplificateur 223 au duplexeur 222, et donc à l'antenne 221. Cette antenne 221 large bande permet en effet l'émission des deux bandes d'émission 12 et 14 et la réception de la bande de réception 13. Cette triple utilisation entraîne une réduction de l'encombrement et du poids du récepteur portable. Le duplexeur 222 assure la distinction entre les signaux émis et les signaux reçus.

Dans la seconde position (transmission satellitaire), le commutateur 238 assure la connexion à l'antenne 226, par l'intermédiaire d'une chaîne de traitement préalable. Cette antenne 226 est accordée sur 2,5 GHz, ce qui correspond à la bande de réception satellitaire 15, et connectée à un circulateur 239 (optionnel), puis à un amplificateur à faible bruit 240.

On comprend que la bande de fréquence 15 (2,5 GHz) ne peut pas être transposée directement par la chaîne de modulation analogique 210. La chaîne de traitement préalable comprend donc, selon l'invention, un mélangeur 241 destiné à transposer en fréquence intermédiaire le signal 242 reçu de façon qu'il soit compatible avec les moyens de transposition. Le mélangeur 241 est suivi d'un filtre passe-bande 243, fournissant un signal 225 dépourvu des signaux parasites résiduels de mélange.

La fréquence de transposition $f_t$ en fréquence intermédiaire 244 est choisie de façon que :

$$f_t \approx f_{r1} \pm f_{r2}$$

où :

$f_t$ est fréquence de transposition 244 ;
$f_{r1}$ est la fréquence de modulation du signal reçu par l'antenne 226 (environ 2,5 GHz) ;
$f_{r2}$ est la fréquence de modulation du signal reçu par l'antenne 221 (environ 1,8 GHz), soit encore la fréquence de travail de la chaîne 210 de démodulation analogique.

Selon une caractéristique essentielle de l'invention, la fréquence de transposition $f_t$ n'est pas synthétisée, classiquement, à partir d'un synthétiseur de fréquence à VCO. Elle est générée à partir de la fréquence de transposition 229, par division 245. Ainsi, un seul synthétiseur de fréquence est nécessaire pour assurer, dans le cas de la réception satellitaire, la transposition en fréquence intermédiaire 241 et la démodulation $288_I$, $288_Q$. Cela conduit, à nouveau, à un gain en poids, en encombrement, et en consommation.

De cette façon, le signal 224 est démodulé en conversion directe, par la chaîne 26, alors que le signal 225 est démodulé en fréquence intermédiaire, sous le contrôle d'un oscillateur local 230 unique.

Dans le mode de réalisation correspondant aux bandes de fréquence de la figure 1, le diviseur 245 est un diviseur par 3. En effet, on a :

- fréquence de réception satellitaire : $fr_2 = 2480$ MHz ;
- fréquence de réception terrestre, égale à la fréquence de transposition 229: $f_{r1} = 1850$ MHz.

On vérifie aisément qu'en soustrayant $f_t = 1850/3 \approx 620$ MHz à $fr_2$, on obtient $2480-620 = 1860$ MHz soit, sensiblement, $f_{r1}$. Le signal 225 à la fréquence 1860 MHz est démodulable directement par la chaîne analogique 26.

Plus généralement, le diviseur 245 divise par N, N étant choisi tel que :

$$f_{r2} \pm f_{r1}/N \approx fr_1$$

soit:

$$N \approx \pm f_{r1}/(f_{r2}-f_{r1})$$

Le mode de réalisation décrit ci-dessus peut subir plusieurs variantes.

En particulier la modulation de tous les signaux et la démodulation des signaux en mode terrestre est décrite en conversion directe. Cette technique s'avère avantageuse pour de nombreuses raisons, et notamment d'une part l'économie de moyens (pas de transposition en fréquence intermédiaire), donc de coût, d'encombrement et de consommation, et d'autre part la limitation des risques d'interférence.

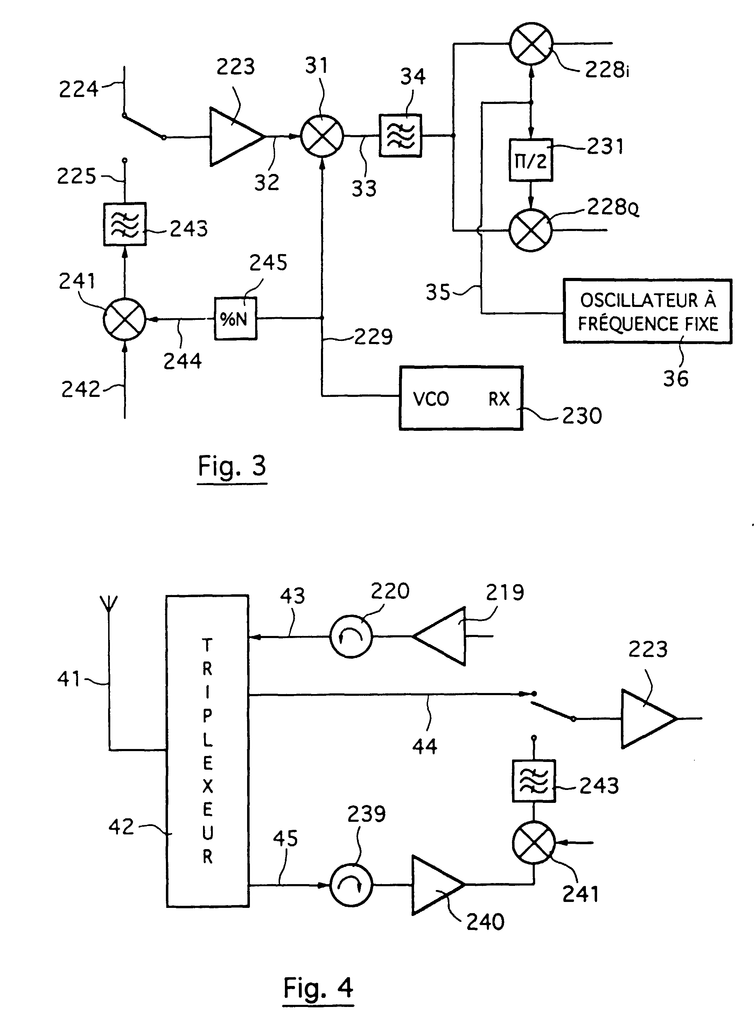

Toutefois, la chaîne de modulation analogique 26 peut tout à fait comprendre des moyens de transposition en fréquence intermédiaire. Dans ce cas, avantageusement, les différentes fréquences de modulation, respectivement de transposition, peuvent être obtenues à partir d'une unique fréquence synthétisée, puis divisée de façon à obtenir les fréquences voulues. Ce principe est illustré en figure 3, pour la démodulation (seuls les éléments différents de ceux de la figure 2 sont décrits).

L'oscillateur contrôlé en tension 230 génère une fréquence 229, qui contrôle un mélangeur 31 pour la transposition en fréquence intermédiaire des signaux reçus 32, quel que soit le mode de transmission. De façon à éliminer les signaux résiduels de mélange, le signal 33 délivré par le mélangeur 31 est filtré à l'aide d'un filtre passe-bande 34, avant d'alimenter les deux mélangeurs $228_I$ et $228_Q$.

Ces deux mélangeurs $228_I$ et $228_Q$ sont pilotés par une porteuse pure 35, généré par un oscillateur à fréquence fixe 36.

Par ailleurs, le mélangeur 224 est toujours piloté par la fréquence 244 correspondant à la division par N 245 de la fréquence 229.

On a supposé, lors de la description de la figure 2, que les traitements numériques effectués par les modules 24 et 26 étaient identiques dans les deux modes de transmission, et donc que ces modules pouvaient être partagés par ces deux modes. Cela suppose, par exemple, que la transmission satellitaire mette en oeuvre, de même que la transmission GSM une répartition des données à multiplex temporel (TDMA : Time Division Multiplex Access).

Toutefois, d'autres modes de répartition peuvent être mis en oeuvre, tel que le multiplexage en fréquence (FDMA) ou par codage (CDMA).

Dans ce cas, les modules numériques 24 et 26 peuvent être partiellement dédoublés, ainsi que cela est illustré en pointillés sur la figure 2.

Ainsi, si le signal reçu est d'origine satellitaire, les commutateurs $246_i$ et $246_Q$ dirigent les voies I et Q $232_I$ et $232_Q$ vers une chaîne de démodulation 26, qui effectue une démodulation conforme à la modulation mise en oeuvre, puis un processeur de traitement de signal 24', qui délivre un signal 23 au module de codage de la parole 22.

Avantageusement, ce second processeur 24' partage avec le premier la mémoire vive 247 et le microprocesseur de gestion 248.

Bien que cela ne soit pas illustré sur la figure 2, il est clair que la même distinction entre les traitements doit être réalisée à l'émission.

De façon à simplifier les commutations et limiter les interférences, les commutateurs $246_I$ et $246_Q$ peuvent être pilotés simultanément au commutateur 238 déjà décrit.

Enfin, l'utilisation de deux antennes distinctes (221 et 226) n'est pas obligatoire. Le dispositif de l'invention peut également être équipé d'une antenne unique bibande, ainsi que cela est illustré en figure 4. Cela permet de réduire encore l'encombrement et le poids.

Dans ce cas, le dispositif comprend une antenne 41 unique à double résonance (aux fréquences 1,8 GHz et 2,5 GHz).

Cette antenne est connectée à un triplexeur 42 dirigeant :

- les signaux à émettre 43 vers l'antenne 41 ;
- les signaux reçus à la fréquence $f_{r2}$ = 1,8 GHz (44) vers l'amplificateur 223 ;
- les signaux reçus à la fréquence $f_{r1}$ = 2,5 GHz (45) vers le circulateur (optionnel) 239 et l'amplificateur 240.

D'autres modes de réalisation peuvent être bien sûr envisagés, sans sortir du cadre de l'invention. En particulier, le traitement distinct des signaux décrits en réception peut être réalisé en émission, si ce sont les bandes de fréquence d'émission qui sont distinctes l'une de l'autre.

## Revendications

1. Dispositif d'émission/réception de signaux numériques portable bimode permettant des communications, selon un premier mode de transmission, via un réseau terrestre utilisant une première bande de fréquence d'émission (14) et une seconde bande de fréquence de réception (15), et, selon un second mode de transmission, via un réseau satellitaire utilisant une troisième bande de fréquence d'émission (12) et une quatrième bande de fréquence de réception (13), lesdites première (14) et troisième (12) bandes de fréquence étant sensiblement voisines et lesdites seconde (15) et quatrième (13) bandes de fréquence étant sensiblement distantes l'une de l'autre,
caractérisé en ce qu'il comprend des moyens (215) de synthèse d'une première fréquence ($213_I$) de modulation pour la modulation ($211_I$, $211_Q$) des signaux émis dans lesdites première (14) et troisième (12) bandes de fréquence, et d'une seconde fréquence (229) de transposition pour la démodulation ($228_I$, $228_Q$) des signaux reçus dans lesdites seconde (15) et quatrième (13), bandes de fréquence, et
des moyens (245) de division de ladite seconde fréquence (229) de transposition, délivrant une troisième fréquence (244) de transposition pour la démodulation (241) des signaux reçus dans ladite quatrième (13), respectivement seconde (15), bande de fréquence.

2. Dispositif selon la revendication 1, caractérisé en ce qu'il comprend :

- des moyens (211$_I$, 211$_Q$) de modulation sur deux voies en quadrature contrôlés par ladite première fréquence (213$_I$), assurant une modulation à conversion directe des signaux émis dans lesdites première (14) et troisième (12) bandes de fréquence ;
- des premiers moyens (228$_I$, 228$_Q$) de transposition sur deux voies en quadrature contrôlés par ladite seconde fréquence (229) assurant une démodulation à conversion directe des signaux reçus dans ladite seconde (15), respectivement quatrième (13), bande de fréquence ;
- des seconds moyens (241) de transposition à fréquence intermédiaire contrôlés par ladite troisième fréquence (244), assurant le produit des signaux (242) reçus dans ladite quatrième (13), respectivement seconde (15), bande de fréquence par ladite troisième fréquence (244) et délivrant un signal (225 en fréquence intermédiaire destiné à être démodulé par lesdits premiers moyens (228$_I$, 228$_Q$) de transposition.

3. Dispositif selon l'une quelconque des revendications 1 et 2, caractérisé en ce que lesdits moyens (245) de division effectuent une division de fréquence par N, où N est un entier sensiblement égal à ± f$_{r1}$/(f$_{r2}$-f$_{r1}$), f$_{r1}$ correspondant à ladite quatrième, respectivement seconde, bande de fréquence, et f$_{r2}$ correspondant à ladite seconde, respectivement quatrième, bande de fréquence.

4. Dispositif d'émission/réception de signaux numériques portable bimode permettant des communications, selon un premier mode de transmission, via un réseau terrestre utilisant une première bande de fréquence d'émission et une seconde bande de fréquence de réception, et, selon un second mode de transmission, via un réseau satellitaire utilisant une troisième bande de fréquence d'émission et une quatrième bande de fréquence de réception, lesdites seconde et quatrième bandes de fréquence étant sensiblement voisines et lesdites première et troisième bandes de fréquence étant sensiblement distantes l'une de l'autre, caractérisé en ce qu'il comprend des moyens de synthèse d'une première fréquence de transposition pour la démodulation des signaux reçus dans lesdites seconde et quatrième bandes de fréquence, et d'une seconde fréquence de modulation pour la modulation des signaux émis dans lesdites première, et troisième, bandes de fréquence, et des moyens de division de ladite seconde fréquence de modulation, délivrant une troisième fréquence de modulation pour la modulation des signaux émis dans ladite troisième, respectivement première, bande de fréquence.

5. Dispositif selon la revendication 4, caractérisé en ce qu'il comprend :

- des moyens de transposition sur deux voies en quadrature contrôlés par ladite première fréquence, assurant une démodulation à conversion directe des signaux reçus dans lesdites seconde et quatrième bandes de fréquence ;
- des premiers moyens de modulation sur deux voies en quadrature contrôlés par ladite seconde fréquence, assurant une modulation à conversion directe des signaux destinés à être émis dans ladite première, respectivement troisième, bande de fréquence ;
- des seconds moyens de modulation à fréquence intermédiaire contrôlés par ladite troisième fréquence, assurant le produit de signaux intermédiaires modulés par lesdits premiers moyens de modulation par ladite troisième fréquence, et délivrant des signaux destinés à être émis dans ladite troisième, respectivement première, bande de fréquence.

6. Dispositif selon l'une quelconque des revendications 4 et 5, caractérisé en ce que lesdits moyens de division effectuent une division de fréquence par N, où N est un entier sensiblement égal à ± f$_{r1}$/(f$_{r2}$-f$_{r1}$), avec f$_{r1}$ correspondant à ladite troisième, respectivement première bande de fréquence et f$_{r2}$ correspondant à ladite première, respectivement troisième bande de fréquence .

7. Dispositif selon l'une quelconque des revendications 2, 3, 5 et 6, caractérisé en ce que les signaux numériques transmis selon ledit premier mode sont codés selon un premier type de codage et les signaux numériques transmis selon ledit second mode sont codés selon un second type de codage, et en ce que lesdits premiers moyens de modulation (211$_I$, 211$_Q$), respectivement de transposition, sont connectés sélectivement à des premiers (24, 26) ou à des seconds (24',26') moyens de codage, respectivement de décodage, en fonction du mode de transmission mis en oeuvre.

8. Dispositif selon l'une quelconque des revendications 1 à 7, caractérisé en ce qu'il comprend une première antenne d'émission/réception permettant la réception d'au moins une desdites bandes de fréquence de réception et l'émission d'au moins une desdites bandes de fréquence d'émission, lesdites bandes de fréquence étant sensiblement voisines.

9. Dispositif selon la revendication 8, caractérisé en ce qu'il comprend une seconde antenne (226) de réception, respectivement d'émission, ladite première antenne (221) étant associée directement auxdits premiers moyens de transposition (228$_I$, 228$_Q$), respectivement de modulation, et ladite seconde antenne (226) étant associée auxdits seconds moyens de transposition (241), respectivement de modulation.

10. Dispositif selon la revendication 9, caractérisé en ce qu'il comprend des moyens (238) de sélection d'une desdites antennes (221, 226), en fonction du mode de transmission mis en oeuvre.

11. Dispositif selon l'une quelconque des revendications 1 à 7, caractérisé en ce qu'il comprend une antenne unique (41) à double résonance, accordée de façon à assurer l'émission et la réception de l'ensemble desdites bandes de fréquence (12, 13, 14, 15).

12. Dispositif selon l'une quelconque des revendications 1 et 4, caractérisé en ce que ladite seconde fréquence (229) contrôle des troisièmes moyens (31) de transposition en fréquence intermédiaire, et en ce que ledit dispositif comprend des moyens (36) de génération d'une quatrième fréquence (35) fixe contrôlant des moyens (228$_I$, 228$_Q$) de transposition, respectivement de modulation, en quadrature à conversion directe.

13. Dispositif selon l'une quelconque des revendications 1 à 3 caractérisé en ce que :

- ladite première bande de fréquence d'émission (14) est comprise entre 1710 et 1785 MHz ;
- ladite première bande de fréquence de réception (15) est comprise entre 1805 et 1880 MHz ;
- ladite seconde bande de fréquence d'émission (12) est comprise entre 1610 et 1625,5 MHz ; et
- ladite seconde bande de fréquence de réception (13) est comprise entre 2483,5 et 2500 MHz.

14. Dispositif selon la revendication 13, caractérisé en ce que lesdits moyens (245) de division assurent une division par 3.

**Patentansprüche**

1. Tragbare Sender-/Empfängervorrichtung für digitale Signale mit zwei Betriebsarten, die Kommunikationen in einer ersten Übertragungsbetriebsart über ein terrestrisches Netz unter Verwendung eines ersten Sendefrequenzbands (14) und eines zweiten Empfangsfrequenzbands (15) und in einer zweiten Übertragungsbetriebsart über ein Satellitennetz unter Verwendung eines dritten Sendefrequenzbands (12) und eines vierten Empfangsfrequenzbands (13) ermöglicht, wobei das erste (14) und das dritte (12) Frequenzband im wesentlichen benachbart und das zweite (15) und das vierte (13) Frequenzband im wesentlichen voneinander beabstandet sind,
dadurch gekennzeichnet, daß sie Synthesemittel (215) für eine erste Modulationsfrequenz (231$_I$) zur Modulation (211$_I$, 211$_Q$) der in dem ersten (14) und dritten (12) Frequenzband gesendeten Signale und für eine zweite Umsetzungsfrequenz (229) zur Demodulation (228$_I$, 228$_Q$) der in dem zweiten (15) und vierten (13) Frequenzband empfangenen Signale sowie
Mittel (245) zum Teilen der zweiten Umsetzungsfrequenz (229) umfaßt, die eine dritte Umsetzungsfrequenz (244) zur Demodulation (241) der in dem vierten (13) bzw. zweiten (15) Frequenzband empfangenen Signale liefern.

2. Vorrichtung nach Anspruch 1, dadurch gekennzeichnet, daß sie umfaßt:

- durch die erste Frequenz (213$_I$) gesteuerte Mittel (211$_I$, 211$_Q$) zur Modulation auf zwei Quadraturkanälen, die eine Modulation mit direkter Umwandlung der in dem ersten (14) und dritten (12) Frequenzband gesendeten Signale gewährleisten;
- durch die zweite Frequenz (229) gesteuerte erste Mittel (228$_I$, 228$_Q$) zum Umsetzen auf zwei Quadraturkanälen, die eine Demodulation mit direkter Umwandlung der in dem zweiten (15) und vierten (13) Frequenzband empfangenen Signale gewährleisten;
- durch die dritte Frequenz (244) gesteuerte zweite Mittel (241) zum Umsetzen auf Zwischenfrequenz, die das Produkt der in dem vierten (13) bzw. zweiten (15) Frequenzband empfangenen Signale (242) mit der dritten Frequenz (244) gewährleisten und ein Zwischenfrequenzsignal (225) abgeben, das vorgesehen ist, von den ersten Umsetzungsmitteln (228$_I$, 228$_Q$) demoduliert zu werden.

3. Vorrichtung nach einem beliebigen der Ansprüche 1 und 2, dadurch gekennzeichnet, daß die Mittel zum Teilen (245) eine Teilung der Frequenz durch N durchführen, wobei N eine ganze Zahl und im wesentlichen gleich $\pm f_{r1}/(f_{r2}-f_{r1})$ ist, wobei $f_{r1}$ dem vierten bzw. zweiten Frequenzband und $f_{r2}$ dem zweiten bzw. vierten Frequenzband entspricht.

4. Tragbare Sender-/Empfängervorrichtung für digitale Signale mit zwei Betriebsarten, die Kommunikationen in einer ersten Übertragungsbetriebsart über ein terrestrisches Netz unter Verwendung eines ersten Sendefrequenzbands und eines zweiten Empfangsfrequenzbands und in einer zweiten Übertragungsbetriebsart über ein Satellitennetz unter Verwendung eines dritten Sendefrequenzbands und eines vierten Empfangsfrequenzbands ermöglicht, wobei das zweite und das vierte Frequenzband im wesentlichen benachbart und das erste und das dritte Frequenzband im wesentlichen voneinander beabstandet sind,
dadurch gekennzeichnet, daß sie Synthesemittel für eine erste Umsetzungsfrequenz zur Demodulation der in dem zweiten und vierten Frequenzband empfangenen Signale und für eine zweite Modulationsfrequenz zur Modulation der in dem ersten und dritten Frequenzband gesendeten Signale sowie Mittel zum Teilen der zweiten Modulationsfrequenz umfaßt, die eine dritte Modulationsfrequenz zur Modulation der in dem dritten bzw. ersten Frequenzband empfangenen Signale liefern.

5. Vorrichtung nach Anspruch 4, dadurch gekennzeichnet, daß sie umfaßt:

   - durch die erste Frequenz gesteuerte Mittel zur Umsetzung auf zwei Quadraturkanälen, die eine Demodulation mit direkter Umwandlung der in dem zweiten und vierten Frequenzband empfangenen Signale gewährleisten;
   - durch die zweite Frequenz gesteuerte erste Mittel zur Modulation auf zwei Quadraturkanälen, die eine Modulation mit direkter Umwandlung der zum Senden auf dem ersten bzw. dritten Frequenzband bestimmten Signale gewährleisten;
   - durch die dritte Frequenz gesteuerte zweite Mittel zur Modulation auf Zwischenfrequenz, die das Produkt von durch die ersten Modulationsmittel modulierten Zwischensignalen mit der dritten Frequenz gewährleisten und Signale abgeben, die zum Senden auf dem dritten bzw. ersten Frequenzband vorgesehen sind.

6. Vorrichtung nach einem beliebigen der Ansprüche 4 und 5, dadurch gekennzeichnet, daß die Mittel zum Teilen eine Teilung der Frequenz durch N durchführen, wobei N eine ganze Zahl und im wesentlichen gleich $\pm f_{r1}/(f_{r2}-f_{r1})$ ist, wobei $f_{r1}$ dem dritten bzw. ersten Frequenzband und $f_{r2}$ dem ersten bzw. dritten Frequenzband entspricht.

7. Vorrichtung nach einem beliebigen der Ansprüche 2, 3, 5 und 6, dadurch gekennzeichnet, daß die in der ersten Betriebsart übertragenen Signale nach einem ersten Typ von Kodierung kodiert sind und die in der zweiten Betriebsart übertragenen digitalen Signale nach einem zweiten Typ von Kodierung kodiert sind,
und daß die ersten Mittel ($211_I$, $211_Q$) zur Modulation bzw. Umsetzung je nach eingesetzter Übertragungsbetriebsart selektiv an erste (24, 26) bzw. zweite (24', 26') Kodier- bzw. Dekodiermittel angeschlossen sind.

8. Vorrichtung nach einem beliebigen der Ansprüche 1 bis 7, dadurch gekennzeichnet, daß sie eine erste Sende/Empfangsantenne umfaßt, die den Empfang wenigstens eines der Empfangsfrequenzbänder und das Senden wenigstens eines der Sendefrequenzbänder erlaubt, wobei diese Frequenzbänder im wesentlichen benachbart sind.

9. Vorrichtung nach Anspruch 8, dadurch gekennzeichnet, daß sie eine zweite Empfangs- bzw. Sendeantenne (226) umfaßt, wobei die erste Antenne (221) den ersten Umsetzungs- bzw. Modulationsmitteln ($228_I$, $228_Q$) direkt zugeordnet ist und die zweite Antenne (226) den zweiten Umsetzungsbzw. Modulationsmitteln (241) zugeordnet ist.

10. Vorrichtung nach Anspruch 9, dadurch gekennzeichnet, daß sie Mittel zum Auswählen einer der Antennen (221, 226) in Abhängigkeit von der angewendeten Übertragungsbetriebsart umfaßt.

11. Vorrichtung nach einem beliebigen der Ansprüche 1 bis 7, dadurch gekennzeichnet, daß sie eine einzige Antenne (41) mit doppelter Resonanz umfaßt, die abgestimmt ist, um Senden und Empfang sämtlicher Frequenzbänder (12, 13, 14, 15) zu gewährleisten.

12. Vorrichtung nach einem beliebigen der Ansprüche 1 und 4, dadurch gekennzeichnet, daß die zweite Frequenz (229) die dritten Mittel (31) zum Umsetzen auf Zwischenfrequenz steuert, und daß die Vorrichtung Mittel (36) zum Erzeugen einer vierten, festen Frequenz (35) umfaßt, die die Quadraturumsetzungs- bzw. -modulationsmittel mit direkter Umwandlung steuert.

13. Vorrichtung nach einem beliebigen der Ansprüche 1 bis 3, dadurch gekennzeichnet, daß

   - das erste Sendefrequenzband (14) zwischen 1710 und 1785 MHz liegt;
   - das erste Empfangsfrequenzband (15) zwischen 1805 und 1880 MHz liegt;
     das zweite Sendefrequenzband (12) zwischen 1610 und 1625,5 MHz liegt; und
   - das zweite Empfangsfrequenzband (13) zwischen 2483,5 und 2500 MHz liegt.

14. Vorrichtung nach Anspruch 13, dadurch gekennzeichnet, daß die Mittel (245) zum Teilen eine Teilung durch 3 gewährleisten.

**Claims**

1. Dual mode portable digital signal transceiver providing communication, in a first transmission mode, via a terrestrial network using a transmit first frequency band (14) and a receive second frequency band (15) and, in a second transmission mode, via a satellite network using a transmit third frequency band (12) and a receive fourth frequency band (15), said first frequency band (14) and said third frequency band (12) being substantially adjoining and said second frequency band (15) and said fourth frequency band (13) being substantially far apart, said transceiver comprising means (215) for synthesizing a modulation first frequency $(213_I)$ for modulation $(211_I, 211_Q)$ of signals transmitted in said first frequency band (14) and said third frequency band (12) and a conversion second frequency (229) for demodulation $(228_I, 228_Q)$ of signals received in said second frequency band (15) and said fourth frequency band (13), and means (245) for dividing said conversion second frequency (229), supplying a conversion third frequency (244) for demodulation (241) of signals received in said fourth frequency band (13) and said second frequency band (15).

2. Transceiver according to claim 1 characterized in that it further comprises:

   - modulation means $(211_I, 211_Q)$ on two paths in phase quadrature controlled by said first frequency $(213_I)$ carrying out direct conversion modulation of signals transmitted in said first frequency band (14) and said third frequency band (12);
   - first conversion means $(228_I, 228_Q)$ on two paths in phase quadrature controlled by said second frequency (229) carrying out direct conversion demodulation of signals received in said second frequency band (15) and said fourth frequency band (13);
   - second intermediate frequency conversion means (241) controlled by said third frequency (244) supplying the product of signals (242) received in said fourth frequency band (13) and said second frequency band (15) by said third frequency (244) and supplying an intermediate frequency signal (225) to be demodulated by said first conversion means $(228_I, 228_Q)$.

3. Transceiver according to claim 1 or claim 2 characterised in that said frequency divider means (245) divide by N where N is an integer substantially equal to $\pm f_{r1}/(f_{r2}-f_{r1})$, $f_{r1}$ corresponding to said fourth or said second frequency band and $f_{r2}$ corresponding to said second or said fourth frequency band.

4. Dual mode portable digital signal transceiver providing communication, in a first transmission mode, via a terrestrial network using a transmit first frequency band and a receive second frequency band and, in a second transmission mode, via a satellite network using a transmit third frequency band and a receive fourth frequency band, said second and said fourth frequency bands being substantially adjoining and said first and said third frequency bands being substantially far apart, characterised in that said transceiver comprises means for synthesizing a conversion first frequency for demodulation of signals received in said second and fourth frequency bands and a modulation second frequency for modulation of signals transmitted in said first and third frequency bands, and means for dividing said modulation second frequency supplying a modulation third frequency for modulation of signals transmitted in said third frequency band and said first frequency band.

5. Transceiver according to claim 4 characterised in that:

   - conversion means on two paths in phase quadrature controlled by said first frequency and carrying out direct conversion demodulation of signals received in said second and fourth frequency bands;
   - first modulation means on two paths in phase quadrature controlled by said second frequency carrying out direct conversion modulation of signals to be transmitted in said first and third frequency bands;
   - second intermediate frequency modulation means controlled by said third frequency and supplying the product of intermediate signals modulated by said first modulation means by said third frequency and supplying signals to be transmitted in said third and first frequency bands.

6. Transceiver according to claim 4 or claim 5 characterised in that said frequency divider means divide by N where N is an integer substantially equal to $\pm f_{r1}/ (f_{r2}-f_{r1})$, where $f_{r1}$ corresponds to said third or said first frequency band and $f_{r2}$ corresponds to said first or said third frequency band.

7. Transceiver according to any one of claims 2, 3, 5 and 6 characterised in that the digital signals transmitted in said first mode are coded by means of a first type of coding and the digital signals transmitted in said second mode are coded by means of a second type of coding, and said first modulation means ($211_I$, $211_Q$) or said first conversion means are selectively connected to first (24, 26) or second (24', 26') coding and decoding means according to the transmission mode in use.

8. Transceiver according to any one of claims 1 to 7 characterised in that it further comprises a first transmit/receive antenna for receiving at least one of said receive frequency bands and transmitting at least one of said transmit frequency bands, said frequency bands being substantially adjoining.

9. Transceiver according to claim 8 characterised in that it further comprises a second receive or transmit antenna (226), said first antenna (221) being directly associated with said first conversion means ($228_I$, $228_Q$) or said first modulation means and said second antenna (226) being associated with said second conversion means (241) or said second modulation means.

10. Transceiver according to claim 9 characterized in that it further comprises means (238) for selecting one of said antennas (221, 226) according to the transmission mode in use.

11. Transceiver according to any one of claims 1 to 7 characterised in that it further comprises a single dual resonance antenna (41) tuned to transmit and receive all of said frequency bands (12, 13, 14, 15).

12. Transceiver according to claim 1 or claim 4 characterised in that said second frequency (229) controls third intermediate frequency conversion means (31) and said transceiver comprises means (36) for generating a fixed fourth frequency (35) controlling direct quadrature conversion modulation means ($228_I$, $228_Q$).

13. Transceiver according to any one of claims 1 to 3 characterised in that:

- said first transmit frequency band (14) is between 1 710 MHz and 1 785 MHz;
- said first receive frequency band (15) is between 1 805 MHz and 1 880 MHz;
- said second transmit frequency band (12) is between 1 610MHz and 1 625.5 MHz; and
- said second receive frequency band (13) is between 2 483.5 MHz and 2 500 MHz.

14. Transceiver according to claim 13 characterised in that said divider means (245) divide by three.

EP 0 631 400 B1

12

14

15

11

13

1610 1710 1805 2485,5 f

1625,5 1785 1880 2500 MHz

## Fig. 1

Fig. 2

EP 0 631 400 B1

Fig. 3

Fig. 4